# EUROPEAN PATENT APPLICATION

(11) **EP 4 015 324 A1**
(43) Date of publication of application: **22.06.2022**
(21) Application number: 21213739.2
(22) Date of filing: 10.12.2021
(51) Int. Cl.: B60T 17/22, F16D 66/00

(54) **BRAKE TEMPERATURE ESTIMATION**

(30) Priority: 16.12.2020 GB 202019857
(71) Applicant: Airbus Operations Limited, Bristol BS34 7PA (GB)
(72) Inventor: BILL, Andrew, Bristol, BS34 7PA (GB)
(74) Representative: EIP

(57) **Abstract**

There is provided a brake temperature estimation apparatus for estimating the temperature of a vehicle brake. The apparatus comprises a memory which stores thermal behaviour information relating the temperature of a brake of a braked wheel of the vehicle to the temperature of tire gas in the tire of the braked wheel, and a controller which is configured to: receive a first tire gas temperature value relating to the temperature of tire gas in the tire of the braked wheel at a given time; receive a second tire gas temperature value relating to the temperature of tire gas in a tire of a non-braked wheel of the vehicle at the given time; calculate a difference between the first tire gas temperature value and the second tire gas temperature value; and estimate a temperature of the brake of the braked wheel based on the calculated difference and the thermal behaviour information.

## Description

### TECHNICAL FIELD

The present invention relates to a brake temperature estimation apparatus for estimating the temperature of a vehicle brake, to a brake temperature estimation system including such an apparatus, to an aircraft in combination with such a system, and to a method of estimating the temperature of a vehicle brake.

### BACKGROUND

Regulations require aircraft brakes to be able to handle an aborted takeoff at any moment prior to the plane leaving the runway. Brakes should not exceed a specified temperature, to avoid performance degradation, so the regulations prohibit an aircraft from taking off if its brakes are too hot (e.g. above 400°C). To ensure that the brakes are cool enough even after use during taxiing out to the runway, it is recommended that an aircraft is not dispatched if its brakes are above a predefined temperature (e.g. 150°C, as measured by a brake temperature sensor), which is significantly lower than the maximum permitted take-off temperature and allows for temperature increase during taxi braking.

Most commercial airliners have temperature sensors on or near the brake packs which measure the temperatures of the brake packs and provide these measurements to a brake temperature monitoring system (BTMS) comprised in the avionics systems of the aircraft. On some aircraft the BTMS may provide the brake temperature measurements directly to the flight crew, to enable them to determine whether or not the brakes are cool enough to permit the aircraft to take off. On other aircraft the BTMS is configured to simply output an indication of whether or not the brake temperatures are above a predefined threshold, and does not provide flight crew with actual temperature values.

### SUMMARY

A first aspect of the present invention provides a brake temperature estimation apparatus for estimating the temperature of a vehicle brake. The apparatus comprises a memory and a controller. The memory stores thermal behaviour information relating the temperature of a brake of a braked wheel of the vehicle to the temperature of tire gas in the tire of the braked wheel. The controller is configured to: receive a first tire gas temperature value relating to the temperature of tire gas in the tire of the braked wheel at a given time; receive a second tire gas temperature value relating to the temperature of tire gas in a tire of a non-braked wheel of the vehicle at the given time; calculate a difference between the first tire gas temperature value and the second tire gas temperature value; and estimate a temperature of the brake of the braked wheel based on the calculated difference and on the thermal behaviour information.

Optionally, the first tire gas temperature value is a measured value of the temperature of tire gas in the tire of the braked wheel and the second tire gas temperature value is an adjusted value generated by applying an adjustment factor to a measured value of the temperature of tire gas in the tire of the non-braked wheel at the given time.

Optionally, the controller is configured to receive the measured value of the temperature of tire gas in the tire of the non-braked wheel at the given time and to generate the second tire gas temperature value by applying the adjustment factor to the received measured value of the temperature of tire gas in the tire of the non-braked wheel.

Optionally, the adjustment factor is stored in the memory. Optionally, the memory stores wheel characteristic information relating to the characteristics of the braked wheel and to characteristics of the non-braked wheel, and the controller is configured to calculate the adjustment factor based on the wheel characteristic information.

Optionally, the wheel characteristic information comprises a set of values of one or more parameters in respect of the braked wheel and a set of values of the same one or more parameters in respect of the non-braked wheel, wherein the one or more parameters includes any or all of: wheel location (relative to the vehicle); wheel size; wheel mass; wheel type; wheel thermal properties; wheel material; tire type; tire size; tire mass; tire material; tire thermal properties; tire pressure; load on the wheel.

Optionally, the adjustment factor is configured such that the adjusted tire gas temperature represents a tire gas temperature that would be expected to be measured for the non-braked wheel at the given time if the characteristics of the non-braked wheel had the same values as the characteristics of the braked wheel.

Optionally, the controller is configured to receive a time series of first tire gas temperature values covering a selected time period, and to receive a time series of second tire gas temperature values covering the selected time period, wherein the selected time period includes a time at which the brake is at a peak temperature following a braking event.

Optionally, the controller is configured to identify a peak first tire gas temperature value of the received series of first tire gas temperature values, and to estimate a peak brake temperature value using the identified peak first tire gas temperature value and a contemporaneous second tire gas temperature value.

Optionally, the memory stores cooling rate information relating the cooling rate of the brake to the cooling rate of the tire gas in the tire of the braked wheel, and the controller is configured to calculate a cooling rate of tire gas in the tire of the braked wheel based on the received time series of first tire gas temperature values, and to estimate a cooling rate of the brake based on the cooling rate of the tire gas in the tire of the braked wheel and on the stored cooling rate information.

Optionally, the controller is further configured to receive environment information relating to the ambient environment of the braked wheel, and to calculate the cooling rate of the tire gas additionally based on the received environment information.

Optionally, the controller is configured to estimate a time at which the temperature of the brake will be equal to a predetermined threshold temperature, based on the estimated peak brake temperature and the estimated cooling rate of the brake.

Optionally, the estimation apparatus is comprised in a portable device configured to be operated off-board of the vehicle.

A second aspect of the invention provides a brake temperature estimation system comprising a brake temperature estimation apparatus according to the first aspect; a first sensor apparatus configured to acquire the first tire gas temperature information and send it to the estimation apparatus; and a second sensor apparatus configured to acquire the second tire gas temperature information and send it to the estimation apparatus.

Optionally, the first sensor apparatus is connectable to the estimation apparatus by a first wireless communications link and the second sensor apparatus is connectable to the estimation apparatus by a second communications link. Optionally, the first sensor apparatus is connectable to the estimation apparatus by a first wireless communications link and the second sensor apparatus is connectable to first sensor apparatus by a second communications link. Optionally, the first sensor apparatus is connectable to the second sensor apparatus by a first wireless communications link and the second sensor apparatus is connectable by a second wireless communications link to the estimation apparatus.

A third aspect of the invention provides an aircraft in combination with the brake temperature estimation system of the second aspect. The aircraft comprises a braked wheel having a brake, and a non-braked wheel. The first sensor apparatus is arranged on the braked wheel to measure the temperature of tire gas in the braked wheel and the second sensor apparatus is arranged on the non-braked wheel to measure the temperature of tire gas in the non-braked wheel.

Optionally, the braked wheel is comprised in a main landing gear and the non-braked wheel is comprised in a nose landing gear.

Optionally, the non-braked wheel is located on the aircraft such that it is expected to experience ambient conditions during operation of the aircraft that are more similar to the ambient conditions experienced by the braked wheel than the ambient conditions expected to be experienced by a differently-located non-braked wheel of the aircraft.

Optionally, the estimation apparatus is connectable by a communications link to an on-board system of the aircraft.

A fourth aspect of the invention provides a method of estimating the temperature of a vehicle brake. The method comprises:
receiving a first tire gas temperature value relating to the temperature of gas in the tire of a braked wheel of the vehicle at a given time;
receiving a second tire gas temperature value relating to the temperature of gas in the tire of a non-braked wheel of the vehicle at the given time;
receiving thermal behaviour information relating the temperature of the brake to the temperature of the tire gas in the braked wheel;
calculating a difference between the first tire gas temperature value and the second tire gas temperature value; and
estimating a temperature of the brake at the given time based on the calculated difference in combination with the received thermal behaviour information.

Optionally, the second tire gas temperature value is an adjusted tire gas temperature value, and the method further comprises generating the second tire gas temperature value by applying an adjustment factor to a measured value of the temperature of tire gas in the non-braked wheel at the given time.

Optionally, the first tire gas temperature value is received as part of a time series of first tire gas temperature values covering a selected time period and the method further comprises:
calculating a cooling rate of the tire gas in the braked wheel based on the time series of received first tire gas temperature values; and
estimating a cooling rate of the brake based on the calculated tire gas cooling rate in combination with information relating the cooling rate of the brake to the cooling rate of the tire gas in the braked wheel.

Optionally, the method further comprises estimating a time at which the temperature of the brake will be equal to a predetermined threshold temperature, based on the estimated temperature of the brake at the given time and the estimated cooling rate of the brake.

Optionally, the method is configured to be performed by a brake temperature estimation apparatus according to the first aspect.

### BRIEF DESCRIPTION OF THE DRAWINGS

Embodiments of the invention will now be described, by way of example only, with reference to the accompanying drawings, in which:
Figure 1 is a schematic representation of an example brake temperature estimation system comprising a brake temperature estimation apparatus according to the invention;
Figure 2a is a schematic representation of the first sensor apparatus of the example brake temperature estimation system of Figure 1;
Figure 2b is a schematic representation of the estimation apparatus of the example brake temperature estimation system of Figure 1;
Figure 3 is a graph showing example temperature profiles for tire gas in a braked wheel, a brake of the braked wheel, and tire gas in a non-braked wheel;
Figure 4 is a flow chart illustrating an example method of estimating the temperature of a brake; and
Figure 5 is a front view of an example aircraft suitable for use with a brake temperature estimation apparatus according to the invention.

### DETAILED DESCRIPTION

The examples of the present invention provide a brake temperature estimation apparatus for estimating the temperature of a vehicle brake, which may be implemented alongside an existing BTMS of any type, to provide enhanced functionality and/or redundancy.

Each example brake temperature estimation apparatus comprises a memory and a controller. The memory stores thermal behaviour information relating the temperature of a brake of a braked wheel of a vehicle to the temperature of tire gas in the tire of the braked wheel. The controller is configured to receive a first tire gas temperature value relating to the temperature of tire gas in the tire of the braked wheel at a given time; receive a second tire gas temperature value relating to the temperature of tire gas in the tire of a non-braked wheel of the vehicle at the given time; calculate a difference between the first tire gas temperature value and the second tire gas temperature value; and estimate a temperature of a brake of the braked wheel. The temperature of the brake is estimated based on the calculated difference and on the thermal behaviour information. In examples in which the vehicle is an aircraft, the braked wheel may be comprised in a main landing gear of the aircraft and the non-braked wheel may be comprised in a nose landing gear of the aircraft.

The brake temperature estimation apparatus according to the invention thereby provide an indirect way of determining the temperature of a brake, which is independent of any brake temperature sensing system present on the vehicle. It determines the brake temperature based on measured tire gas temperature, which can be measured by a temperature sensor disposed in the enclosed space defined by a wheel and a tire mounted on that wheel, or on measured wheel temperature, which can be measured by a temperature sensor disposed on a wheel, for example as part of a tire pressure indicator system (TPIS). A temperature sensor disposed in the enclosed space defined by a wheel and a tire mounted on that wheel may be easily retrofittable to a vehicle, for example during a process of replacing a tire. The brake temperature apparatus itself may be installed either on-board or off-board the vehicle, and is not required to interact with any vehicle systems. Advantageously, the brake temperature apparatus may provide additional functionality not provided by another brake temperature sensing system of the vehicle, such as an in-built BTMS, and can therefore be used to improve the operation of an existing vehicle.

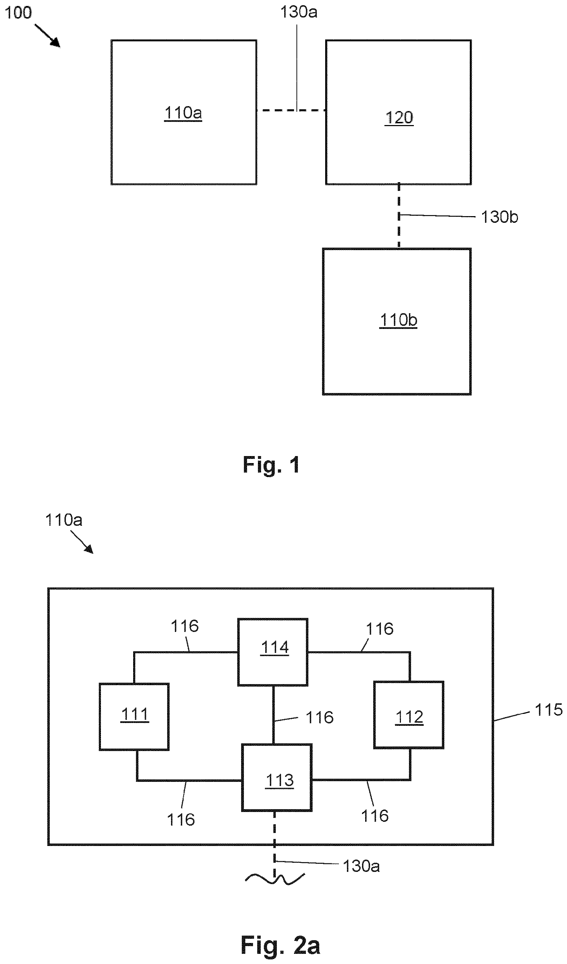

Figure 1 shows an example brake temperature estimation system 100, which comprises a brake temperature estimation apparatus 120 according to the invention. The brake temperature estimation system 100 can be used to estimate the temperature of a vehicle brake, and in particular a temperature of an aircraft brake. The brake temperature estimation system 100 can be used to estimate the temperature of an aircraft brake following a braking event which occurs during landing and/or taxiing of the aircraft. In the context of the current disclosure, the term "braking event" is used to refer to operation of the brake during landing and taxi-in of the aircraft. In the current disclosure, the term "braking event" is used to refer to the main landing braking, during which a relatively large amount of energy is input to the brake. It may also refer to subsequent operations of the brake during taxi-in, as any cooling of the brake in between these brake operations will be negligible.

The brake temperature estimation system 100 comprises a first sensor apparatus 110a and a second sensor apparatus 110b. In the illustrated example the first sensor apparatus 110a is connectable by a first communications link 130a to an estimation apparatus 120, and the second sensor apparatus 110b is connectable by a second communications link 130b to the estimation apparatus 120. In other examples (not illustrated), only one of the first and second sensor apparatus 110a, 110b is connectable by a communications link to the estimation apparatus 120. In such examples the first and second sensor apparatus 110a, 110b are connectable to each other by a wireless communications link, and the sensor apparatus 110a, 110b which is not connectable to the estimation apparatus 120 is configured to communicate data to the other sensor apparatus 110a, 110b, which is configured to send that data on to the estimation apparatus 120.

Each of the first and second communications links 130a, 130b may wired, wireless, or part wired and part wireless. The brake temperature estimation system 100 is configured such that the estimation apparatus 120 is able to be located remotely from the first and second sensor apparatus 110a, 110b during operation of the brake temperature estimation system 100. For example, each sensor apparatus 110a, 110b may be located on or in a wheel assembly of a vehicle, whilst the estimation apparatus 120 is located on or in another part of the vehicle (e.g. in an avionics bay of an aircraft), or separately from the vehicle (e.g. in a portable maintenance device).

In some examples in which the vehicle is an aircraft, the estimation apparatus 120 can be comprised in an avionics system of the aircraft, or can be connectable to an avionics system in any suitable manner such that the estimation apparatus 120 is able to communicate estimated brake temperature values to the aircraft avionics system. For example, the estimation apparatus may be comprised in or connectable to a controller of a BTMS of the aircraft. In such examples the estimation apparatus can be configured to receive power via a connection to the aircraft avionics system.

In other examples, the estimation apparatus may be completely independent from any on-board system of the vehicle. In such examples the estimation apparatus may be comprised in an off-board system, such as a portable maintenance device, which may or may not be able to communicate with on-board systems of the vehicle, or it may comprise a separate on-board system. In such examples the estimation apparatus is provided with suitable means for receiving control commands and/or for outputting estimated temperature values, such as a display, such as a user interface.

Fig. 2a shows the first sensor apparatus 110a in more detail. The second sensor apparatus 110b is substantially identical to the first sensor apparatus 110a such that the following discussion applies equally to the second sensor apparatus 110b. The first sensor apparatus 110a is configured to transmit a signal containing a measured tire gas temperature value to the prediction apparatus 120 via the communications link 130a. A measured tire gas temperature value sent to the estimation apparatus by the first sensor apparatus may be used by the estimation apparatus as a first tire gas temperature value in a process of estimating a brake temperature. The first sensor apparatus 110a is suitable for use in estimating the temperature of a vehicle brake, but may have other functions such as monitoring tire gas temperature. In some examples the first sensor apparatus 110a is a sensor apparatus associated with a tire pressure indicating system (TPIS) of the aircraft.

The first sensor apparatus 110a is provided in the form of a sensor package 110a comprising various functional components. In the illustrated example these components comprise a temperature sensor 111; a wireless communications interface 112; a power source 113; and a sensor controller 114. Optionally, the sensor package 110a may comprise one or more further sensors (not shown) configured to measure one or more other parameters, such as tire gas pressure. The components of the sensor package 110a are contained within a housing 115. Wired connections 116 are present between various of the components 111-114. In particular, the temperature sensor 111, the communications interface 112 and the sensor controller 114 each have a wired connection 116 to the power source 113, via which those components receive electrical power. The temperature sensor 111 and the communications interface 112 each have a wired connection to the sensor controller 114 via which those components can receive and/or transmit data. Such data may comprise, for example, control signals, measurement data, operational status data, or the like.

The sensor package 110a is configured to be disposed at least partially within an enclosed space defined by a wheel and a tire mounted on that wheel. The sensor package 110a may be configured to be mounted on the wheel or on the tire, or may be configured to be unsecured and free to move within the enclosed space. The housing 115 is configured to protect the components 111-114 and connections 116 from the external environment, including from any impacts and vibrations that may be experienced during operation of the sensor package 110a on a vehicle. The material(s) and configuration of the housing 115 are selected to be suitable for the particular intended application of the sensor package 110a. For example, if the sensor package 110a is intended for use on an aircraft wheel assembly, the housing 115 must be able to withstand the extremes of temperature that can be experienced in an aircraft tire (potentially between -55°C and 275°C). In some examples the housing 115 may comprise a thick layer of silicone rubber. The housing 115 may further comprise features configured to facilitate attachment of the sensor package 115 to a wheel or a tire.

The temperature sensor 111 is configured to directly measure the temperature of gas in an enclosed space defined by a vehicle wheel and a tire mounted on that wheel. The temperature sensor 111 may be any suitable sensor for measuring gas temperature within a tire, such as a thermocouple. The temperature sensor 111 may be configured to perform a measurement in response to receiving a control signal from the sensor controller 111, or may be configured to automatically perform measurements at periodic intervals, or may be configured to continuously perform measurements. The temperature sensor 111 may be configured to apply meta-data to each measured temperature value which indicates the time at which the measurement was performed, or to associate each measured value with a time in some other manner. The temperature sensor 111 is configured to send measurement data comprising one or more measured temperature values to the sensor controller 114. The temperature sensor 111 is configured to receive electrical power from the power source 113.

Other examples are possible in which the temperature sensor is configured to measure the temperature of the wheel on which the tire is mounted. The temperature of the wheel at its inner surface, which is in direct contact with the tire gas, is expected to be substantially the same as the temperature of the tire gas. A temperature sensor configured to measure the temperature of an inner surface of the wheel may be mounted directly on the wheel, at an appropriate location. In other respects such a temperature sensor may be substantially the same as the temperature sensor 111.

The power source 113 may be any type of power source suitable for supplying electrical power to the other components 111, 112, 114 of the sensor package 110a. The power source 113 may comprise a battery. Such a battery should have sufficient capacity to power the normal operation of all of the other components of the sensor package 110a for at least a maximum service interval of a wheel assembly on which the sensor package 110a is installed (that is, a longest time period that may elapse between maintenance processes performed on the wheel assembly). A battery comprised in the power source 113 may have sufficient capacity to power all of the components of the sensor package 110a for a selected time period which depends on the intended application of the sensor package 110a. In some examples the power source 113 may comprise an energy harvesting device of any suitable type. In some examples the power source 113 may comprise both a battery and an energy harvesting device, in which case the capacity (and therefore the size) of the battery may be able to be smaller than if no energy harvesting device were present.

The wireless communications interface 112 is configured to be operated by the sensor controller 114 to transmit data to the estimation apparatus 120, via the first communications link 130a. In some examples the wireless communications interface 112 is also configured to receive data from the estimation apparatus 120. The wireless communications interface 112 may additionally be configured to transmit data to and/or receive data from one or more further devices or systems remote from the sensor package 110. The wireless communications interface 112 includes at least one transceiver. More than one transceiver may be provided, each using different wireless technology and/or arranged to transmit and receive over different ranges. Any suitable form or forms of wireless communications technology may be used by the wireless communications interface 112. The wireless communications interface 112 is configured to receive electrical power from the power source 113. The wireless communications interface 112 is configured to receive control signals (including data to be transmitted by the wireless communications interface 112) from the sensor controller 114.

The sensor controller 114 is configured to operate the other components of the sensor package 110a. In some examples the sensor controller 114 may be pre-programmed with various measurement protocols and may, at any given time, operate the other components of the sensor package 110a according to a selected one of the pre-programmed protocols. The sensor controller 114 may be configured to select a particular measurement protocol to use in dependence on current operational conditions, and/or may be configured to receive control commands from a remote system which specify the use of a particular measurement protocol. The predetermined measurement protocols programmed onto the sensor controller 114 may include, for example, a brake temperature estimation measurement protocol which specifies how the temperature sensor 111 should be operated in order to obtain tire gas temperature information suitable for use by the estimation apparatus 120 in estimating a brake temperature. For example, the brake temperature estimation measurement protocol may specify that tire gas temperature should be measured continuously during a particular time period, such as between landing and subsequent taxi-out if the vehicle is an aircraft.

The sensor controller 114 may comprise a processor and a memory unit. The memory unit may be used to store computer program instructions for execution by the processor; and data, such as measurement data received from the temperature sensor 111. The measurement protocols discussed above are stored in the memory unit in the form of computer program instructions. The memory unit may include non-volatile rewritable storage, such as flash memory which can retain data without requiring applied power. Alternatively, volatile storage, which is kept powered by the power source 113, may be employed; or combinations of read-only and rewritable storage. The memory unit of the sensor controller 114 may be configured to store a history of measurement data received from the temperature sensor 111. The history may be stored for a predetermined amount of time. If the vehicle is an aircraft, the predetermined storage time may be at least as long as a maximum flight cycle duration of the aircraft. This can ensure that a set of tire gas temperature measurements covering at least the time period from the last landing of the aircraft to the present time is held. Longer periods of history may also be kept.

The sensor controller 114 is configured to operate the wireless communications interface 112 to send measured tire gas temperature values to the estimation apparatus 120, via the wireless link 130a. The sensor controller 114 is also configured to receive control signals from one or more remote devices, including the estimation apparatus 120, through the wireless communications interface 112. The sensor controller 114 may be configured to automatically send measured tire gas temperature values to the estimation apparatus 120, for example in response to certain operational conditions being met, or the sensor controller 114 may be configured to send measured tire gas temperature values to the estimation apparatus 120 in response to receiving a control signal received from the estimation apparatus 120 which requests one or more tire gas temperature values.

In some examples, the sensor controller 114 is configured to send only tire gas temperature values measured by the temperature sensor 110 to the estimation apparatus 120 (that is, it is not configured to send tire gas temperature values measured by any other sensor apparatus). In such examples, the first sensor apparatus 110a and the second sensor apparatus 110b each send their own measured temperature values separately to the estimation apparatus 120, using the first and second communications links 130a and 130b respectively. However; other examples are possible in which the first and second sensor apparatus 110a, 110b are in communication with each other, and one of the first and second sensor apparatus 110a, 110b is configured to send the temperature values measured by both of the first and second sensor apparatus 110a, 110b.

In such examples the sensor controller 114 is configured to operate the wireless communications interface 112 to communicate data with other sensor apparatus of the same type as the sensor apparatus 110a, mounted on other wheel assemblies of the same vehicle. The other sensor apparatus include the second sensor apparatus 110b, and may include yet further sensor apparatus of the same type as the sensor apparatus 110a. The set of sensor apparatus which are communicatively-linked may not comprise all of the sensor apparatus of the same type as the sensor apparatus 110a installed on the vehicle. For example, the set of communicatively-linked sensor apparatus may comprise all of the sensor apparatus on a particular side (i.e. port or starboard) of the vehicle.

In such examples, one sensor apparatus of the set of communicatively-linked sensor apparatus installed on the vehicle is configured to collate data from all of the sensor apparatus in the communicatively-linked set and to send the collated data to the estimation apparatus 120. Such collated data is arranged (e.g. by having appropriate meta data applied to the measured temperature values contained therein) such that the estimation apparatus 120 is able to determine which wheel assembly of the vehicle a particular temperature value or series of temperature values relates to.

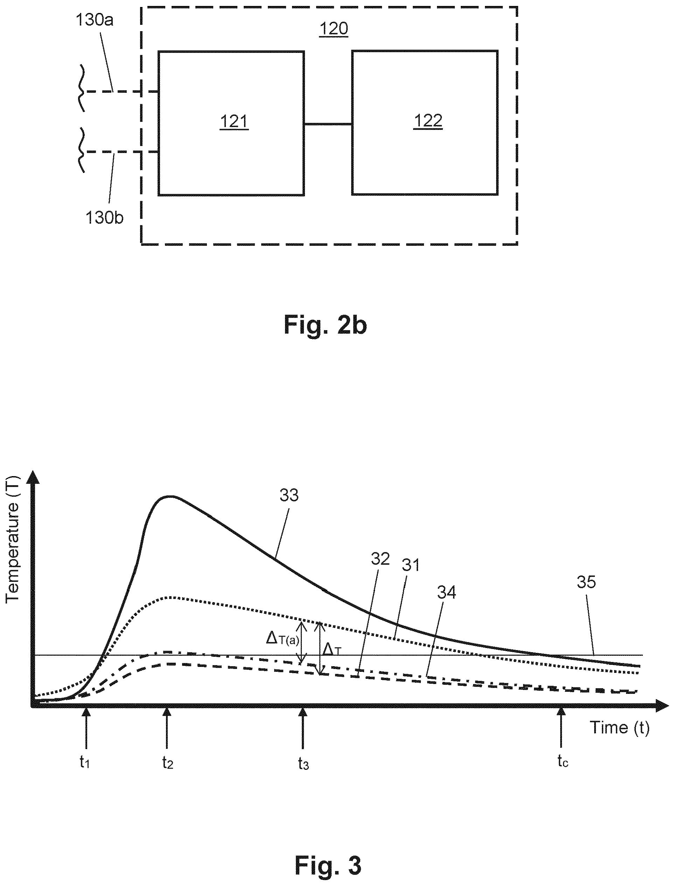

Figure 2b shows the estimation apparatus 120 in more detail. The estimation apparatus 120 is configured to estimate the temperature of a vehicle brake. The estimation apparatus 120 comprises a memory 122 and a controller 121. The controller 121 comprises a processor configured to execute computer program instructions, which may be stored in the memory 121 and/or may be received via control signals. The controller 121 is configured to retrieve data from the memory 122, and may also be configured to write data to the memory 122.

The memory 122 stores thermal behaviour information relating the temperature of a brake of a braked wheel of a vehicle to the temperature of tire gas in the tire of the braked wheel. The thermal behaviour information is configured to enable the controller 121 to determine the temperature of the brake at a given time based on a measured temperature of tire gas in the braked wheel at the given time. In particular, the thermal behaviour information is configured to enable the controller 121 to determine the temperature of the brake at the given time based on a difference between the measured temperature of tire gas in the braked wheel at the given time and a temperature (either measured or adjusted) of tire gas in the non-braked wheel at the given time. The thermal behaviour information may be stored in the form of a look-up table, a mathematical relationship, a machine learning algorithm, a computer model or the like.

The memory 122 can comprise any suitable implementation of a computer readable storage medium, such as a hard drive, flash memory, non-volatile memory, etc. Fig. 2b shows the memory 122 and controller 121 comprised in a single unit, which may, e.g., comprise a single housing containing the controller 121 and the memory 122. However; it is also possible for the memory 122 to comprise a separate unit from the controller 121, in which case the memory 122 will be connected to the controller 121 by a communications link (which may be wired or wireless).

The estimation apparatus 120 may comprise a functional module of a multi-functional device, such as a general-purpose computer or a multi-functional maintenance device, in which case the controller 121 may be embodied by a processor of the multi-functional device. The estimation apparatus 120 may be comprised in a portable device such as a tablet computer or a dedicated portable maintenance device.

The controller 121 is configured to receive a first tire gas temperature value and second tire gas temperature value. The first tire gas temperature value relates to the temperature of tire gas in the tire of the braked wheel at a given time. The second tire gas temperature value relates to the temperature of tire gas in the tire of the non-braked wheel at the given time. The first tire gas temperature value is a measured temperature value measured by the first sensor apparatus at the given time, and in the illustrated example the controller 121 is configured to receive the first tire gas temperature value directly from the first sensor apparatus 110a via the first communications link 130a. The controller 121 may receive measurement values from the first (and second) sensor apparatus by means of a communications interface comprised in the estimation apparatus, which may be configured for wired communication, wireless communication, or both, using any suitable communications protocols. A communications interface of the estimation apparatus may have substantially the same features as the communications interface 112 of the first sensor apparatus 110a described above.

In the illustrated example the controller is also configured to receive measured temperature values from the second sensor apparatus 110b, via the second communications link 130b. The second tire gas temperature value used by the controller in a process of estimating the temperature of the brake at the given time may be a measured temperature value measured by the second sensor apparatus 110b at the given time. Alternatively the second tire gas temperature value may be an adjusted value generated by applying an adjustment factor to a measured temperature value measured by the second sensor apparatus at the given time. In this case the controller is configured to "receive" the second tire gas temperature value from a function (comprised in the controller 121) which generates the adjusted value.

The first tire gas temperature value may be received from the first sensor apparatus 110a as part of a time-series of measured temperature values covering a selected time period. The selected time period may be a time period in which a braking event has occurred. In examples in which the vehicle is an aircraft, preferably the selected time period includes a time at which the brake is at its hottest following a landing of the aircraft. In some examples the controller may also receive a corresponding time series of measured temperature values from the second sensor apparatus 110b, covering the same selected time period.

The controller is configured to use the received first tire gas temperature value, the received second tire gas temperature value, and the stored thermal behaviour information to estimate a temperature of the brake of the braked wheel at the given time. The principles upon which the estimation process performed by the controller 121 is based will now be explained with reference to Figure 3.

Figure 3 illustrates the relationship between the temperature of tire gas in the tire of an example braked wheel, the temperature of tire gas in the tire of an example non-braked wheel, and the temperature of the brake of the braked wheel. A time series of tire gas temperature measurements for the braked wheel is plotted on Figure 3 as the dotted line 31. A corresponding time series of tire gas temperature measurements for the non-braked wheel is plotted as the dashed line 32. The corresponding actual temperature of the brake of the braked wheel is plotted as the solid line 33. The plots 31, 32, 33 cover a time period during which a braking event occurred, as well as a subsequent period during which the brake was cooling. The time t₁ represents the end of the braking event, meaning that no more energy was input to the brake after this time. The delay between t₁ and the later time t₂ at which the brake reaches its maximum temperature is due to the brake having a significant thermal mass.

The heat input to the brake is almost entirely provided by kinetic energy dissipated by the brake during the braking event. By contrast, the heat input to the tire gas in the non-braked wheel is provided by the ambient conditions (i.e. air temperature, sunlight, wind, and the like) and by hot tire material (the tire material is heated due to deflections experienced by the tire when rolling). The heat input to the tire gas in the braked wheel is provided by the hot brake as well as by the ambient conditions and hot tire material. The ambient conditions experienced by the braked wheel and the non-braked wheel are the same, as is the amount of rolling. A difference between the temperature of the tire gas in the braked wheel and the temperature of the tire gas in the non-braked wheel at a given time (after correcting for any relevant differences between the physical characteristics of the braked wheel and the non-braked wheel) is caused entirely by the heating effect of the hot brake on the tire gas in the braked wheel. The magnitude of this heating effect depends on the temperature of the brake, meaning that the actual temperature of the brake can be determined based on the temperature difference.

Physical characteristics of a wheel which affect how the temperature of tire gas in a tire of that wheel varies in response to rolling and in response to ambient conditions include wheel location (relative to the vehicle); wheel size; wheel mass; wheel type; wheel thermal properties; wheel material; tire type; tire size; tire mass; tire material; tire thermal properties; tire pressure; load on the wheel. If the physical characteristics of the braked wheel and the non-braked wheel are the same, all of the difference between the temperature of tire gas in the braked wheel and the temperature of tire gas in the non-braked wheel at a given time is attributable to the heating effect of the brake. In such examples the brake temperature is derivable based on the difference Δ_{T} between the temperature of the tire gas in the braked wheel and the temperature of the tire gas in the non-braked wheel at the given time, in combination with the thermal behaviour information stored by the memory 122. In practice it would never be the case that the physical characteristics of the braked wheel and the non-braked wheel are the same, because the two wheels will always differ at least in their location on the vehicle. However; it may be the case in some examples that the differences between the physical characteristics of the braked wheel and the non-braked wheel are sufficiently small that they can be ignored.

In other examples, where the physical characteristics of the braked wheel and the non-braked wheel differ significantly, these differences must be accounted for in order to accurately estimate the brake temperature based on the tire gas temperature of the braked wheel. Differences between the physical characteristics of the braked wheel and the non-braked wheel will affect how the temperature of the tire gas in each varies in response to the ambient conditions, as well as how it varies in response to rolling of the wheel. For example, the amount by which the material of a tire heats up for a given distance and speed of travel by the vehicle will depend on the size, configuration and inflation state of the tire. The amount by which tire gas in a tire is heated (or cooled) by the ambient conditions will depend on factors such as wheel size (since, for example, a larger wheel may be heated more by sunlight, as it has a larger surface area on which that sunlight is incident) and location of the wheel on the vehicle.

As discussed above with reference to Figure 2b, an adjusted tire gas temperature value may be generated by applying an adjustment factor or coefficient to a measured tire gas temperature value. The adjustment factor is configured to account for the effect on tire gas temperature of differences in the values of characteristic parameters between the braked wheel and the non-braked wheel. In particular, when the adjustment factor is applied to a temperature value of the tire gas in the non-braked wheel measured at a given time, the resulting adjusted value represents a tire gas temperature that would be expected to be measured for the non-braked wheel at the given time if it had the same physical characteristics as the braked wheel. In other words, the adjustment factor is a mathematical representation of a difference in how the temperature of tire gas in the braked wheel will vary in response to certain operational conditions as compared to how tire gas in the non-braked wheel will vary in response to the same operational conditions.

The adjustment factor is set based on the physical characteristics of the braked wheel for which it is desired to estimate a brake temperature, and of a selected non-braked wheel of the vehicle, the tire gas temperature of which is being used for the estimation. In particular, the adjustment factor may be set based on differences between the values of parameters representing these physical characteristics. The vehicle may comprise multiple non-braked wheels, in which case the selected non-braked wheels may be selected because it has a particular relationship to the braked wheel. Such a relationship may be, for example, based on proximity of the non-braked wheel to the braked wheel, and/or location of the braked wheel and the non-braked wheel on the aircraft. For example, the selected non-braked wheel may be on the same side (i.e. port or starboard) of the vehicle as the braked wheel. The non-braked wheel may be selected because it is expected to experience similar ambient conditions to the braked wheel during operation, or at least more similar than other non-braked wheels of the vehicle.

The value of the adjustment factor may be determined in any suitable manner. The parameters used to set the adjustment factor are generally expected to remain substantially constant over the operational lifetimes of the wheels to which they relate. This means that an adjustment factor may be set at a time of installing the wheels on the vehicle and will remain valid until, for example, the design of one or both of the wheels (or components thereof) is altered. Certain maintenance procedures relating to the wheels may alter the physical characteristics, in which case the adjustment factor is updated as part of those maintenance procedures.

A time series of adjusted temperature values for the tire gas in the non-braked wheel is plotted on Figure 3 as the line 34. The time series of adjusted temperature values 34 has been generated by applying an adjustment factor to each of the temperature values in the time series 32 of measured values of the temperature of tire gas in the tire of the non-braked wheel. In examples where the physical characteristics of the braked wheel and the non-braked wheel differ significantly, the brake temperature is derivable based on the difference Δ_{T(a)} between the temperature of the tire gas in the braked wheel at the given time and the adjusted temperature of the tire gas in the non-braked wheel at the given time, in combination with the thermal behaviour information stored by the memory 122. Apart from the use of Δ_{T(a)} instead of Δ_{T}, the estimation process is the same.

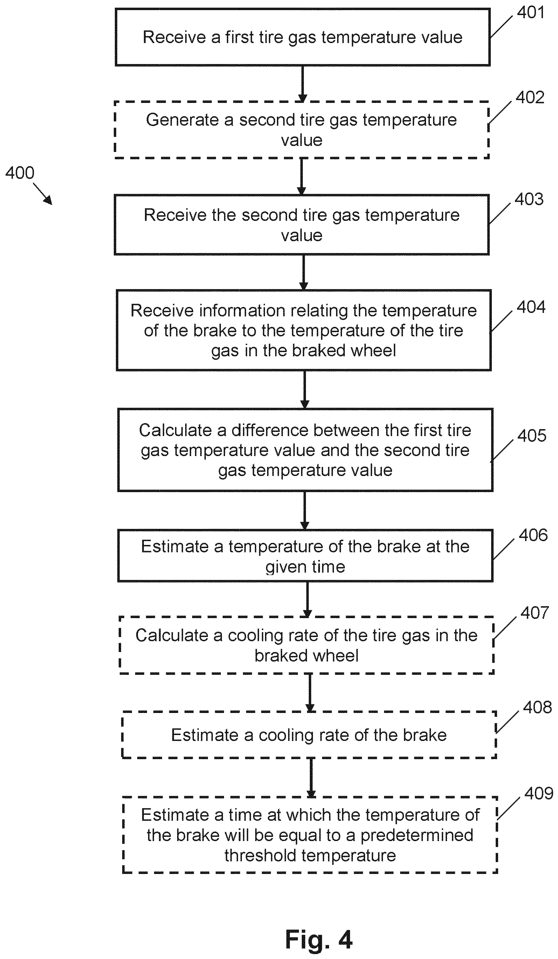

Figure 4 is a flow chart illustrating a method 400 of estimating the temperature of a vehicle brake. The controller 121 of the estimation apparatus 120 may be configured to perform the method 400 in order to generate an estimated brake temperature. The method 400 may be stored in the memory 122 in the form of computer program instructions. The controller 121 may be configured to initiate the method 400 once a predetermined amount of time has elapsed following a braking event. For example, the controller 121 may be configured to initiate the method at the time t₃ as shown on Figure 3. The controller 121 may be configured to repeat the method at times later than t₃, using later measured tire gas temperature values, to produce updated estimates of the brake temperature.

In a first block 401 the controller 121 receives a first tire gas temperature value. The first tire gas temperature value is received in the manner described above, and has the features described above. The given time at which the first tire gas temperature value was measured may be the time t₃, or it may be a later time. The given time may be the measurement time of the most recent first tire gas temperature value available to the controller 121.

In an optional block 402, the controller 121 generates a second tire gas temperature value. The controller 121 is configured to perform block 402 in examples in which the physical characteristics of the braked wheel and the non-braked wheel differ significantly such that an accurate estimation of brake temperature could not be produced without adjusting the measured temperature of tire gas in the non-braked wheel to account for these differences. Generating the second tire gas temperature value comprises receiving a measured value of the temperature of tire gas in a tire of the non-braked wheel at the given time, and applying an adjustment factor having the features described above to the received measured temperature value. The adjustment factor is stored in the memory 122.

The measured value of the temperature of tire gas in the tire of the non-braked wheel may be received, for example from the second sensor apparatus 110b, in the manner described above. Applying the adjustment factor to the received measured tire gas temperature value may comprise multiplying the received measured value by the adjustment factor. The result of the controller applying the adjustment factor to the received measured value is an adjusted value for the temperature of tire gas in the tire of the non-braked wheel at the given time. The adjusted value is then treated by the controller 121 as the second tire gas temperature value for the purposes of performing the method 400. The generation of the second tire gas temperature value may be performed by a dedicated function of the controller 121. The function of the controller 121 which generates the second tire gas temperature value may be configured to provide the second tire gas temperature value to a further function of the controller.

In block 403, the controller 121 receives a second tire gas temperature value. In examples in which optional block 402 has not been performed, the second tire gas temperature value is a measured value of the temperature of tire gas in the tire of the non-braked wheel at the given time. Such a measured value may be received, for example from the second sensor apparatus 110b, in the manner described above. In examples in which optional block 403 has been performed, the second tire gas temperature value is the adjusted value generated by the performance of block 403. In such examples, the second tire gas temperature value is received from the function of the controller which generated the adjusted value.

In block 404 the controller 121 receives thermal behaviour information relating the temperature of the brake to the temperature of the tire gas in the braked wheel, such thermal behaviour information having the features described above. The thermal behaviour information is stored on the memory 122, and so the controller 121 receives the thermal behaviour information from the memory 122.

In block 405 the controller 121 calculates a difference between the first tire gas temperature value and the second tire gas temperature value. The controller 121 may perform block 405 in any suitable manner. Block 405 is performed in the same manner regardless of whether or not the optional block 402 was performed.

In block 406 the controller 121 estimates a temperature of the brake at the given time based on the calculated difference in combination with the received thermal behaviour information. The manner in which the controller 122 performs the estimation will depend on the form of the thermal behaviour information. For example, if the thermal behaviour information is stored in the form of a look-up table which relates a series of temperature difference values to corresponding brake temperature values, the controller 121 estimates the brake temperature by retrieving the brake temperature value which corresponds to the temperature difference calculated in block 405. Alternatively, if the thermal behaviour information is stored in the form of a mathematical relationship, the controller 121 estimates the brake temperature by using the calculated temperature difference as an input to the mathematical relationship.

In some examples the controller 121 is further configured to predict a "time to cool" t_{c}. t_{c} is a time at which the temperature of the brake will equal a predetermined threshold temperature (represented by the line 35 on Figure 3). In examples in which the vehicle is an aircraft, the predetermined threshold temperature 35 may be a temperature which is sufficiently cool to permit push-back of the aircraft.

The controller 121 may be configured to estimate a temperature profile for the brake, and to predict tc based on the estimated temperature profile. A temperature profile represents the thermal behaviour of the brake after a braking event, and has a heating phase (during which kinetic energy dissipated by the brake during the braking effect is increasing the temperature of the brake material) followed by a cooling phase (during which little or no further heat is being input to the brake so that its temperature is decreasing towards the ambient temperature). The line 33 on Figure 3 is an example of a brake temperature profile.

When all external influences remain constant, a brake will cool from its peak temperature in accordance with a characteristic cooling curve, which forms the cooling phase of the temperature profile. The exact shape of this characteristic cooling curve will depend on the mass and specific heat capacity of the brake, the starting temperature, and the ambient conditions. It is possible to calculate the cooling curve of a brake (assuming that relevant characteristics of that brake are known) if the starting temperature (that is the maximum temperature reached by the brake following a braking event) is known and the initial rate of cooling is known.

The peak temperature reached by the brake can be estimated by the controller 121 (e.g. by performing blocks 401-406 of the method 400) based on the difference between the peak temperature of the tire gas in the braked wheel and the contemporaneous temperature (or adjusted temperature) of the tire gas in the non-braked wheel. The peak tire gas temperature is the temperature value at the inflection point of the curve 34, and may not necessarily be the highest value in the set of braked wheel tire gas temperatures. The controller 121 is configured to identify the peak value for the tire gas temperature of the braked wheel using any suitable data analysis techniques.

The initial rate of cooling of the brake can be estimated based on the initial rate of cooling of the tire gas in the braked wheel. Similarly to the brake, the tire gas in the braked wheel cools in accordance with a characteristic cooling curve, the shape of which depends on the starting temperature of the tire gas, the ambient conditions, and the wheel characteristics (including characteristics of the brake, as the brake provides the main source of heat input to the tire gas during the cooling phase). The memory 122 stores information relating to the thermal behaviour of tire gas in the braked wheel (braked tire gas thermal behaviour information), which may comprise parameter values for characteristics of the braked wheel that affect its cooling rate, and or may comprise one or more characteristic cooling curves for the tire gas in the braked wheel.

The tire gas in the braked wheel and the brake will both experience the same ambient conditions during the cooling phase, so differences in their respective cooling rates can be attributed solely to differing starting temperatures, differing physical characteristics, and heat input to the tire gas due to rolling of the wheel during the cooling phase. In practice, for a vehicle such as an aircraft where the brake has a large thermal mass and gets extremely hot, the effect of rolling heat input on the cooling rate of the tire gas in the braked wheel is very small compared to the heating effect of the hot brake. This means that in many examples the effects of rolling on the braked wheel tire gas temperature cooling rate can be ignored when estimating the cooling rate of the brake.

In examples in which the controller 121 is configured to predict the time to cool t_{c}, the controller 121 may perform blocks 401-406 of the method 400 using the peak tire gas temperature of the braked wheel as the first tire gas temperature value, and a contemporaneous second tire gas temperature value. The estimated temperature output by block 405 is then an estimated peak temperature of the brake. In such examples the controller 121 receives the first tire gas temperature value (block 401) as part of a series of first tire gas temperature values covering a selected time period, and is configured to identify the peak tire gas temperature value as described above.

The selected time period begins at t1 and ends at the time t3, or later. t3 represents a minimum duration of the selected time period. t3 is sufficiently later than t2 for the rate of cooling of the tire gas to be derivable from the measurement data with a desired level of accuracy. The selected time period includes the time at which the tire gas temperature in the braked wheel is at its peak value. Where the vehicle is an aircraft and the braking event occurs during a landing of the aircraft, t3 may be at least an hour later than t1. t1 need not exactly coincide with the end of the braking event, but it should be early enough that the peak temperatures of the tire gas are identifiable from the measurement data. That is, t1 must be sufficiently earlier than t2 for the inflection points of the curve 31 to be clearly discernable in the series of measured temperature values.

In examples in which the controller 121 is configured to predict the time to cool t_{c}, the method 400 comprises three further optional blocks 407-409, the performance of which results in a predicted value of t_{c}.

In block 407 the controller 121 calculates a cooling rate of the tire gas in the tire of the braked wheel, based on the time series of received first tire gas temperature values. The controller 121 may calculate this tire gas cooling rate in any suitable manner. For example, the controller 121 may calculate the tire gas cooling rate by calculating a slope of the curve 31 over a time period which falls within the selected time period covered by the first tire gas temperature information. The start and end points of the time period over which the controller 121 calculates the tire gas cooling rate may be set in dependence on the requirements of the particular application. In general, using a longer time period is expected to result in a more accurate determination, although this may not be the case for all examples. The calculated tire gas cooling rate need not be constant over the time period. If the calculated tire gas cooling rate is not constant over the time period, in some examples the controller 121 may be configured to calculate an average tire gas cooling rate for the time period, and to use this average tire gas cooling rate when performing block 408.

In some examples the controller 121 is configured to additionally receive environment information relating to the ambient environment of the braked wheel. Such information may comprise, for example, any or all of: current ambient temperature; current wind speed; current wind direction; predicted future ambient temperature; predicted future wind speed; predicted future wind direction; or the like. Current information may be received from local environment sensors, e.g. comprised in a weather station at an airport at which the aircraft is located, or a local meteorological service. Predicted future information may be comprised in or derived based on a weather forecast generated by a local meteorological service. Such predicted future information preferably covers a time period required for the brake to reach an acceptable push-back temperature. The predicted future information may relate to a time period extending between the current time and the next scheduled push-back of the aircraft.

In such examples, information relating ambient environment conditions to tire gas cooling rate is stored in the memory 122, in any suitable form (such as one or more correction factors, mathematical relationships, and/or look-up tables). In such examples the controller 121 is configured to base the calculation of the cooling rate of the tire gas in the braked wheel additionally on the received environment information and the stored information relating ambient environment conditions to tire gas cooling rate, in any suitable manner appropriate to the nature of the stored information. For example, if the stored information is in the form of a correction factor, the controller may be configured to calculate an initial tire gas cooling rate as described above and then apply the correction factor to generate an adjusted tire gas cooling rate. In such examples the controller 11 uses the adjusted tire gas cooling rate when performing block 408.

In block 408 the controller 121 estimates a cooling rate of the brake based on the calculated cooling rate of the tire gas in the braked wheel. The controller 121 may perform the estimation based on relative cooling rate information relating braked wheel tire gas cooling rate to brake cooling rate which is stored in the memory 122. Such relative cooling rate information may be in the form of a look-up table, a mathematical relationship, a machine learning algorithm, or the like. The manner in which the controller performs block 408 will depend on the nature of the stored relative cooling rate information.

In block 409 the controller 121 estimates a time at which the temperature of the brake will be equal to a predetermined threshold temperature, based on the estimated peak temperature of the brake (as estimated during block 406) and the estimated cooling rate of the brake (as estimated during block 408). Performing block 409 may comprise the controller 121 calculating a temperature profile (or at least a part of a temperature profile covering the cooling phase) for the brake. The calculated temperature profile extends forwards in time at least until the brake temperature equals the threshold 35, and the controller 121 is configured to identify the time t_{c} at which this occurs. The controller 121 may be further configured to output the predicted time to cool in any suitable manner, such that it is available to a vehicle operator and/or a further system of the vehicle.

Some vehicles, and in particular some aircraft, have cooling fans fitted to their braked wheels. Such cooling fans can be activated to increase the rate of cooling of the brakes. The cooling effect of such a fan is felt by both the brake and the tire gas in the braked wheel, and may therefore be considered as comprised in the cooling effect of the ambient conditions for the purposes of estimating the cooling rate of that brake. If the cooling fan on a braked wheel for which it is desired to estimate a time to cool is already operating at the beginning of the time period over which the initial cooling rate of the tire gas is calculated, and remains operating until the brake has cooled to the threshold 35, then t_{c} may be estimated in the same manner described above.

It may be the case that the cooling fan is activated after t₃, for example in response to an estimated time to cool t_{c} output by the controller 121 being deemed to be too late. In such cases the controller may be configured to estimate an updated t_{c} based on first tire gas temperature information covering a second selected time period occurring after the cooling fan has been activated. The second selected time period is long enough for a new cooling rate, influenced by the cooling fan, to become established. The starting temperature used by the controller 121 in estimating the updated t_{c} is the estimated brake temperature at the start of the second selected time period.

It may also be the case that the cooling fan is activated (and/or deactivated) at some time during the time period for which the controller 121 is configured to estimate the initial cooling rate of the brake. In such cases the cooling rate of the tire gas will accelerate after the time at which the cooling fan was activated (or decelerate, if the cooling fan was deactivated). It will not be possible for the controller 121 to accurately estimate t_{c} based on the original time period if this occurs. As such, in some examples where the estimation apparatus is configured for use on a wheel having a cooling fan fitted, the controller 121 may be configured to detect a cooling fan activation signature and/or a cooling fan deactivation signature in the calculated initial cooling rate of the braked wheel tire gas. In response to detecting such a cooling fan activation or deactivation signature, the controller 121 may be configured to shift the time period over which it estimates the initial cooling rate of the brake such that it starts after the cooling fan has been activated or deactivated.

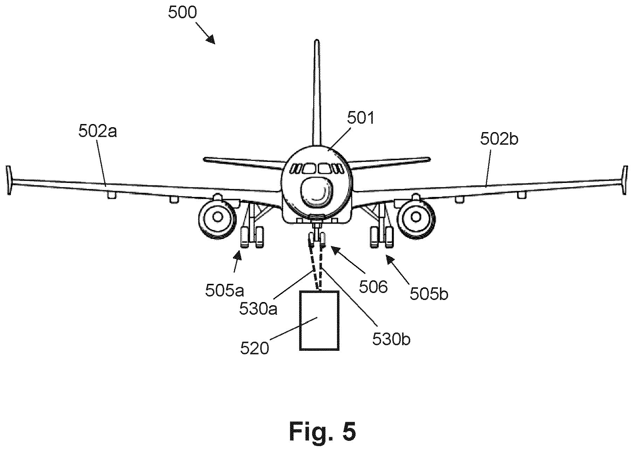

Fig. 5 shows an aircraft 500 suitable for use with a brake temperature estimation apparatus according to the examples (e.g. the brake temperature estimation apparatus 120). The aircraft comprises a fuselage 501 and a pair of wings 502a, 502b. The aircraft 500 is supported on the ground by a pair of main landing gear (MLG) 505a, 505b and a nose landing gear (NLG) 506. Each landing gear assembly 505a, 505b, 506 comprises a pair of wheels. The MLG wheels each comprise a brake (not visible), and are therefore braked wheels. The NLG wheels do not comprise brakes and are therefore non-braked wheels.

Each braked wheel comprises a first sensor apparatus having the features of the example first sensor apparatus 110a and at least one of the non-braked wheels comprises a second sensor apparatus having the features of the example second sensor apparatus 110b. In some examples both of the non-braked wheels comprise such a second sensor apparatus 110b. This aircraft has six wheels in total; four wheels as part of the MLG 505a, 505b and two wheels as part of the NLG 506. The aircraft 500 may therefore comprise up to six sensor apparatus 110a, 110b in total. It will generally be advantageous to provide a sensor device on each wheel assembly of an aircraft or other vehicle. Other models of aircraft may have different numbers of wheel assemblies and hence different numbers of sensor apparatus.

The wheels are divided into two sets, a port set and a starboard set. The starboard set of wheels is made up of the two wheels of the starboard MLG 505a plus the starboard-side wheel of the NLG 506. The port set of wheels is made up of the two wheels of the port MLG 505b plus the port-side wheel of the NLG 506. The division of the wheels into sets is based on the ambient conditions that the wheels are expected to experience when the aircraft 500 is on the ground, and may be different to what is described above for this particular aircraft. The wheels in a given set may all be expected to experience substantially the same ambient conditions, which could be different to the ambient conditions experienced by wheels in a different set.

At least one of the sensor apparatus is configured to communicate with an estimation apparatus 520 according to the invention. The estimation apparatus 520 has the same features as the example estimation apparatus 120 of Figure 2b. In the illustrated example, the estimation apparatus 520 is comprised in a portable maintenance device. In the illustrated example the two second sensor apparatus on the wheels of the NLG 506 are each configured to communicate with the estimation apparatus 520 via wireless communication links 530a, 530b. Each second sensor apparatus 110b receives data from the first sensor apparatus 110a in its respective group, and communicates data from all of the sensor apparatus in the group to the estimation apparatus 520. Other examples are possible in which a different sensor apparatus of the group is configured to communicate with the estimation apparatus 520, or in which each sensor apparatus on the aircraft communicates separately with the estimation apparatus 520.

The aircraft 500 also comprises various further systems, including an avionics system, which may be in communication with at least one of the sensor apparatus 110a, 110b. The estimation apparatus 520 may be configured to communicate with one or more of these further aircraft systems.

In some alternative examples, the estimation apparatus may be comprised in an on-board system of the aircraft 500, rather than an off-board device. In such examples in which the aircraft 500 comprises a BTMS, the estimation apparatus may be comprised in or in communication with the BTMS. In such examples the estimation apparatus may be configured to provide estimated brake temperature values to the BTMS for use by the BTMS as an independent verification of measured brake temperature values received by the BTMS, and/or as a back-up data set for use if one or more brake temperature sensors of the aircraft 500 fails.

Although the invention has been described above with reference to one or more preferred examples or embodiments, it will be appreciated that various changes or modifications may be made without departing from the scope of the invention as defined in the appended claims.

Although the invention has been described above mainly in the context of a fixed-wing aircraft application, it may also be advantageously applied to various other applications, including but not limited to applications on vehicles such as helicopters, drones, trains, automobiles and spacecraft.

Where the term "or" has been used in the preceding description, this term should be understood to mean "and/or", except where explicitly stated otherwise.

## Claims

1. A brake temperature estimation apparatus for estimating the temperature of a vehicle brake, the apparatus comprising:
a memory storing thermal behaviour information relating the temperature of a brake of a braked wheel of the vehicle to the temperature of tire gas in the tire of the braked wheel; and
a controller configured to:
receive a first tire gas temperature value relating to the temperature of tire gas in the tire of the braked wheel at a given time;
receive a second tire gas temperature value relating to the temperature of tire gas in a tire of a non-braked wheel of the vehicle at the given time;
calculate a difference between the first tire gas temperature value and the second tire gas temperature value; and
estimate a temperature of the brake of the braked wheel based on the calculated difference and on the thermal behaviour information.

2. A brake temperature estimation apparatus according to claim 1, wherein the first tire gas temperature value is a measured value of the temperature of tire gas in the tire of the braked wheel and the second tire gas temperature value is an adjusted value generated by applying an adjustment factor to a measured value of the temperature of tire gas in the tire of the non-braked wheel at the given time; optionally wherein the controller is configured to: receive the measured value of the temperature of tire gas in the tire of the non-braked wheel at the given time; and generate the second tire gas temperature value by applying the adjustment factor to the received measured value of the temperature of tire gas in the tire of the non-braked wheel.

3. A brake temperature estimation apparatus according to claim 2, wherein the adjustment factor is stored in the memory; or wherein the memory stores wheel characteristic information relating to the characteristics of the braked wheel and to characteristics of the non-braked wheel, and the controller is configured to calculate the adjustment factor based on the wheel characteristic information;
optionally wherein the wheel characteristic information comprises a set of values of one or more parameters in respect of the braked wheel and a set of values of the same one or more parameters in respect of the non-braked wheel, wherein the one or more parameters includes any or all of: wheel location (relative to the vehicle); wheel size; wheel mass; wheel type; wheel thermal properties; wheel material; tire type; tire size; tire mass; tire material; tire thermal properties; tire pressure; load on the wheel.

4. A brake temperature estimation apparatus according to any of claims 2 to 3, wherein the adjustment factor is configured such that the adjusted tire gas temperature represents a tire gas temperature that would be expected to be measured for the non-braked wheel at the given time if the characteristics of the non-braked wheel had the same values as the characteristics of the braked wheel.

5. A brake temperature estimation apparatus according to any preceding claim, wherein the controller is configured to receive a time series of first tire gas temperature values covering a selected time period, and to receive a time series of second tire gas temperature values covering the selected time period, wherein the selected time period includes a time at which the brake is at a peak temperature following a braking event; optionally wherein the controller is configured to identify a peak first tire gas temperature value of the received series of first tire gas temperature values, and to estimate a peak brake temperature value using the identified peak first tire gas temperature value and a contemporaneous second tire gas temperature value.

6. A brake temperature estimation apparatus according to claim 5, wherein the memory stores cooling rate information relating the cooling rate of the brake to the cooling rate of the tire gas in the tire of the braked wheel, and the controller is configured to calculate a cooling rate of tire gas in the tire of the braked wheel based on the received time series of first tire gas temperature values, and to estimate a cooling rate of the brake based on the cooling rate of the tire gas in the tire of the braked wheel and on the stored cooling rate information; optionally wherein the controller is further configured to receive environment information relating to the ambient environment of the braked wheel, and to calculate the cooling rate of the tire gas additionally based on the received environment information.

7. A brake temperature estimation apparatus according to claim 6, wherein the controller is configured to estimate a time at which the temperature of the brake will be equal to a predetermined threshold temperature, based on the estimated peak brake temperature and the estimated cooling rate of the brake.

8. A brake temperature estimation apparatus according to any preceding claim, wherein the estimation apparatus is comprised in a portable device configured to be operated off-board of the vehicle.

9. A brake temperature estimation system comprising:
a brake temperature estimation apparatus according to any of claims 1 to 8;
a first sensor apparatus configured to acquire the first tire gas temperature information and send it to the estimation apparatus; and
a second sensor apparatus configured to acquire the second tire gas temperature information and send it to the estimation apparatus.

10. A brake temperature estimation system according to claim 9, wherein:
the first sensor apparatus is connectable to the estimation apparatus by a first wireless communications link and the second sensor apparatus is connectable to the estimation apparatus by a second communications link; or
the first sensor apparatus is connectable to the estimation apparatus by a first wireless communications link and the second sensor apparatus is connectable to first sensor apparatus by a second communications link; or
the first sensor apparatus is connectable to the second sensor apparatus by a first wireless communications link and the second sensor apparatus is connectable by a second wireless communications link to the estimation apparatus.

11. An aircraft in combination with the brake temperature estimation system of claim 9 or claim 10, the aircraft comprising a braked wheel having a brake, and a non-braked wheel, wherein the first sensor apparatus is arranged on the braked wheel to measure the temperature of tire gas in the braked wheel and the second sensor apparatus is arranged on the non-braked wheel to measure the temperature of tire gas in the non-braked wheel; optionally wherein the braked wheel is comprised in a main landing gear and the non-braked wheel is comprised in a nose landing gear.

12. An aircraft according to claim 11, wherein the non-braked wheel is located on the aircraft such that it is expected to experience ambient conditions during operation of the aircraft that are more similar to the ambient conditions experienced by the braked wheel than the ambient conditions expected to be experienced by a differently-located non-braked wheel of the aircraft.

13. An aircraft according to any of claims 11 to 12, wherein the estimation apparatus is connectable by a communications link to an on-board system of the aircraft.

14. A method of estimating the temperature of a vehicle brake, the method comprising:
receiving a first tire gas temperature value relating to the temperature of gas in the tire of a braked wheel of the vehicle at a given time;
receiving a second tire gas temperature value relating to the temperature of gas in the tire of a non-braked wheel of the vehicle at the given time;
receiving thermal behaviour information relating the temperature of the brake to the temperature of the tire gas in the braked wheel;
calculating a difference between the first tire gas temperature value and the second tire gas temperature value; and
estimating a temperature of the brake at the given time based on the calculated difference in combination with the received thermal behaviour information.

15. A method according to claim 14, wherein the second tire gas temperature value is an adjusted tire gas temperature value, and wherein the method further comprises generating the second tire gas temperature value by applying an adjustment factor to a measured value of the temperature of tire gas in the non-braked wheel at the given time.

16. A method according to claim 14 or claim 15, wherein the first tire gas temperature value is received as part of a time series of first tire gas temperature values covering a selected time period and the method further comprises:
calculating a cooling rate of the tire gas in the braked wheel based on the time series of received first tire gas temperature values;
estimating a cooling rate of the brake based on the calculated tire gas cooling rate in combination with information relating the cooling rate of the brake to the cooling rate of the tire gas in the braked wheel:
optionally wherein the method further comprises estimating a time at which the temperature of the brake will be equal to a predetermined threshold temperature, based on the estimated temperature of the brake at the given time and the estimated cooling rate of the brake.

17. A method according to any of claims 14 to 16, wherein the method is configured to be performed by a brake temperature estimation apparatus according to any of claims 1 to10.
